# EUROPÄISCHE PATENTANMELDUNG

(11) **EP 1 231 244 A2**
(43) Veröffentlichungstag der Anmeldung: **14.08.2002**
(21) Anmeldenummer: 02001989.9
(22) Anmeldetag: 05.02.2002
(51) Int. Cl.: C09D 11/00

(54) **Tintenstrahltintenzusammensetzung auf Basis von in der Masse gefärbten Pigmentpartikeln**

(30) Priorität: 09.02.2001 DE 10106027
(71) Anmelder: Firma Artech GmbH, design + production in plastic, 44149 Dortmund (DE)
(72) Erfinder: Michele, Helmut, Dr., 44577 Castrop-Rauxel (DE); Busch, Peter, 44869 Bochum (DE); Klein, Dirk, Dr., 58339 Breckerfeld (DE)

(57) **Zusammenfassung**

Tintenzusammensetzung insbesondere für Tintenstrahl-Druckeinrichtungen, welche eine wässrige Trägerflüssigkeit umfasst, in der feste Pigmentpartikel dispergiert sind. Um eine verbesserte Funktionalität zur Herstellung von wasserbeständigen Ausdrucken zu erreichen, wird erfindungsgemäß vorgeschlagen, dass die Pigmentpartikel als durchgehend gefärbte Kunststoffpartikel aus thermoplastischem Kunststoff ausgebildet sind. Außerdem ist ein auf diese Tintenzusammensetzung abgestimmtes Tintendruckverfahren sowie eine Tintendruckereinrichtung Gegenstand dieser Erfindung.

## Beschreibung

Die vorliegende Erfindung bezieht sich auf eine Tintenzusammensetzung, insbesondere für Tintenstrahl-Druckeinrichtungen, welche eine wässrige Trägerflüssigkeit umfasst, in der feste Pigmentartikel dispergiert sind. Weiterhin ist ein auf diese Tintenzusammensetzung abgestimmtes Tintendruckverfahren sowie eine Tintendruckeinrichtung zur Durchführung dieses Tintendruckverfahrens Gegenstand der vorliegenden Erfindung.

Pigmenttinten sind im wesentlichen Suspensionen, bei denen das eigentliche Farbmittel als Feststoff in Form von Pigmentpartikeln vorliegt, welche in einer Trägerflüssigkeit, zumeist auf Wasserbasis, dispergiert sind. Als Pigmente können anorganische oder organische Farbmittel verwendet werden mit der Maßgabe, dass sie in der Trägerflüssigkeit unlöslich sind. Durch die Auswahl dieser Pigmente, die nach dem Antrocknen der Tinte auf der bedruckten Oberfläche haften, lassen sich Ausdrucke mit hoher Farbsättigung und Dauerhaftigkeit herstellen, welche sich mit Tinten auf Basis wasserlöslicher Farbstoffe (dye-based) nicht erreichen lässt. Durch Hinzufügung von nach dem Druck vernetzenden Polymeren lassen sich wasserfeste Drucke herstellen.

Eine grundsätzliche Anforderung an Tintenzusammensetzungen von Pigmenttinten ist, dass die Dispersion langzeitstabil ist, und zwar möglichst auch bei erhöhten Temperaturen. Von besonderer Bedeutung ist dies beispielsweise bei Vorratstanks bzw. Tintenkartuschen für Tintenstrahldrucker und -Plotter, bei denen die Tinteneigenschaften auch bei längerer Lagerung sowie Temperatur- und Klimaschwankungen möglichst gleich bleiben müssen. Um zu gewährleisten, dass die Pigmentpartikel nicht aus der Trägerflüssigkeit ausfällen und durch Bildung von Ablagerungen und Rückständen in den Tintenzuleitungen und Druckdüsen eines Tintenstrahldrucksystems zu Funktionsstörungen führen können, werden als Dispergiermittel und Absetzverhinderungsmittel grenzflächenaktive Stoffe zugesetzt, beispielsweise Tenside. Durch den Zusatz derartiger Additive, welche eine molekulare Struktur mit einem hydrophilen und einem hydrophoben Ende haben, wird die Benetzung der suspendierten Pigmentpartikel erhöht. Dadurch lässt sich zwar eine gewisse Stabilisierung der Dispersion erreichen. Allerdings ist eine exakte Ermittlung und Abstimmung der Additivkombination auf jedes einzelne verwendete Pigment erforderlich, da eine Anpassung an die jeweils unterschiedlichen Grenzflächeneigenschaften zwischen der Pigmentsubstanz und der Trägerflüssigkeit erforderlich ist. Dies bedingt einerseits einen erheblichen Entwicklungsaufwand und führt andererseits dazu, dass bei Verwendung unterschiedlicher Pigmente abweichende Eigenschaften der Tinten kaum zu vermeiden sind.

Ein weiteres Problem besteht bei wasserbeständigen Pigmenttinten darin, dass diese zusätzlich Harze bzw. Polymere enthalten müssen, welche für die wasserfeste Fixierung der Pigmentpartikel auf der bedruckten Oberfläche sorgen. Dadurch, dass diese Substanzen zum einen beim Druck dauerhaft aushärten sollen, beispielsweise durch wasserunlösliche Vernetzung beim Antrocknen, andererseits die feinen Druckdüsen und Tintenversorgungskanäle jedoch keinesfalls mechanisch zugesetzt werden dürfen, entsteht ein Zielkonflikt, dem lediglich durch Kompromisse begegnet werden kann, beispielsweise den Zusatz von Substanzen zur Trocknungsverzögerung und einer regelmäßigen mechanischen Reinigung der Druckdüsen, um Ablagerungen zu verhindern. Dies führt allerdings sowohl zu Abstrichen beim Trocknungsverhalten und in der Wasserfestigkeit, als auch bezüglich einer möglichen Beeinträchtigung des Drucksystems durch dort unerwünschte Fixierung von Tintenrückständen.

Angesichts dieser Problematik liegt der vorliegenden Erfindung die Motivation zugrunde, eine Tintenzusammensetzung anzugeben, welche optimierte Dispersionseigenschaften im Hinblick auf die Verwendung unterschiedlicher Pigmentierungen hat und insbesondere eine verbesserte Funktionalität zur Herstellung von wasserbeständigen Ausdrucken hat. Weiterhin soll ein darauf abgestimmtes Tintendruckverfahren sowie eine Tintendruckeinrichtung angegeben werden.

Zur Lösung der vorangehend erläuterten Problematik wird erfindungsgemäß eine Tintenzusammensetzung vorgeschlagen; insbesondere für Tintenstrahl-Druckeinrichtungen, bei der die Pigmentartikel als durchgehend gefärbte Kunststoffpartikel aus thermoplastischem Kunststoff ausgebildet sind. Das auf dieser Tintenzusammensetzung basierende erfindungsgemäße Tintendruckverfahren sieht vor, dass die als Pigmentpartikel verwendeten eingefärbten Kunststoffpartikel aus thermoplastischem Kunststoff nach dem Aufbringen der Tinte auf die Oberfläche durch Erwärmung aufgeschmolzen und dadurch dauerhaft auf der Oberfläche fixiert werden. Zur Umsetzung dieses Tintendruckverfahrens wird erfindungsgemäß eine Tintendruckeinrichtung vorgeschlagen, welche erfindungsgemäß eine Heizeinrichtung zur Erwärmung der von dem Druckkopf auf die Oberfläche abgegebenen Tinte aufweist.

Die erfindungsgemäße Tintenzusammensetzung fällt unter die Definition einer Pigmenttinte, welche als wesentliche Bestandteile eine Trägerflüssigkeit auf Wasserbasis und in fester Form vorliegende farbtragende Partikel hat, wobei diese Pigmentpartikel in der Trägerflüssigkeit nicht löslich sind und somit ein Flüssigkeits-Feststoff-Gemenge gebildet wird, welches beim Tintendruck auf die zu bedruckende Oberfläche aufgebracht wird, beispielsweise beim Tintenstrahldruck in Form feiner Tintentröpfchen. Nach dem Verdampfen der Trägerflüssigkeit bleiben die Pigmentpartikel in Form des Druckbildes auf der Oberfläche zurück. Damit der Tintendruck wasserfest ist, müssen die Pigmentpartikel dauerhaft und vor allem wasserfest auf der Oberfläche fixiert werden. Diesbezüglich wird gemäß der Erfindung ein neuartiger Ansatz einer thermisch fixierbaren Tinte verfolgt, welche sich grundlegend von den bisher im Stand der Technik bekannten Pigmenttinten unterscheidet. Bei den bekannten Pigmenttinten dienen die dispergierten Pigmentpartikel nämlich ausschließlich als Farbträger, welche bislang nur durch Zugabe von Harzen oder nach dem Ausdruck vernetzenden Polymeren zur Trägerflüssigkeit auf einer bedruckten Oberfläche fixiert werden. Im Unterschied dazu, kann bei der erfindungsgemäßen Tintenzusammensetzung die Fixierung des Druckbilds auf der Oberfläche durch die besondere Ausgestaltung der Pigmentpartikel selbst erfolgen, nämlich durch thermisches Aufschmelzen. Diese sind nämlich als durchgehend farbige, thermoplastische Kunststoffpartikel ausgebildet, d. h. bestehen aus mit Farbmittel (Farbstoff oder Pigment) durchsetztem thermoplastischem Polymer. Durch das Farbmittel haben diese Kunststoffpartikel dieselbe farbgebende Funktion, wie die Pigmentartikel im Stand der Technik. Darüber hinaus ergibt sich durch das verwendete Kunststoffmaterial eine besonders vorteilhafte Zusatzfunktionalität, und zwar sowohl im Hinblick auf die Eigenschaften der Tinte bezüglich Herstellung, Lagerung und Verarbeitung in Drucksystemen, als auch hinsichtlich der damit hergestellten Ausdrucke.

Vorteilhafte Eigenschaften bezüglich der Stabilität der Dispersion können dadurch realisiert werden, dass das eigentlich farbgebende Farbmittel, mit dem die erfindungsgemäßen Kunststoff-Pigmentpartikel gefärbt sind, mechanisch bzw. physikalisch in der Matrix des thermoplastischem Kunststoffs gebunden ist. Die Verwendung eines bestimmten Kunststoffmaterials gewährleistet gleichbleibende Grenzflächeneigenschaften bezüglich einer verwendeten Trägerflüssigkeit, und zwar unabhängig von dem Farbmittel, mit dem die entsprechenden Kunststoffpartikel durchgefärbt sind. Die Grenzflächeneigenschaften, welche für die Stabilität der Dispersion verantwortlich sind, werden nämlich bei der erfindungsgemäßen Tintenzusammensetzung nahezu ausschließlich durch den Kunststoff der Pigmentpartikel und die Trägerflüssigkeit bestimmt, wobei dieser Kunststoff seinerseits mit beliebigen, darin löslichen oder unlöslichen Farbmitteln durchgefärbt sein kann. Dieses Farbmittel ist durch die Kunststoffmatrix gebunden, so dass es folglich keinen unmittelbaren Einfluss auf die Dispersionseigenschafen hat. Im Gegensatz zu im Stand der Technik bekannten Pigmenttinten, bei denen für jedes verwendete Pigment eine möglichst sorgfältig abgestimmte Additivkombination oberflächenaktiver Substanzen zur Stabilisierung der Dispersion zugefügt werden muss, braucht bei der erfindungsgemäßen Tintenzusammensetzung das Dispergiermittel lediglich einmal auf das zwischen Trägerflüssigkeit und Kunststoffoberfläche gebildete Grenzflächensystem abgestimmt zu werden. Für unterschiedlich farbige Tinten wird somit der Entwicklungs- und Herstellungsaufwand deutlich reduziert. Außerdem bekommen Tinten mit unterschiedlichen Farbmitteln identische Dispersionseigenschaften, beispielsweise im Hinblick auf die Langzeitstabilität, die Viskosität und dergleichen. Dies war bislang aufgrund der unterschiedlichen Dispersionseigenschaften nicht möglich. Besonders vorteilhaft ist die erfindungsgemäße Tintenzusammensetzung daher zur Verwendung in Tintenvorratstanks bzw. Tintenkartuschen für Tintenstrahldrucksysteme, bei denen auch nach längerer Lagerung gleichbleibende Eigenschaften gewährleistet sein müssen.

Ein weiterer Vorteil besteht darin, dass die erfindungsgemäßen Kunststoff-Pigmentpartikel durch In-Situ-Polymerisierung hergestellt werden können, wobei das Farbmittel während der Entstehung der Polymermatrix mechanisch in diese eingebunden wird. Bei diesem Herstellungsverfahren lässt sich vorteilhaft eine einheitliche Größe der Pigmentartikel realisieren, und zwar mit einem deutlich geringerem Aufwand als durch das im Stand der Technik bekannte Zermahlen des festen Pigments mit anschließendem Klassieren, beispielsweise durch Windsichtung. Hingegen lassen sich die erfindungsgemäßen Pigmentpartikel mit verbesserten Eigenschaften bei geringerem Herstellungsaufwand fertigen.

Ein besonderer, prinzipieller Vorteil der erfindungsgemäßen Tintenzusammensetzung besteht darin, dass die wasserfeste und dauerhafte Fixierung der Pigmentpartikel auf der bedruckten Oberfläche thermisch, d. h. durch Aufschmelzen des Kunststoffs auf der Oberfläche erfolgt. Dadurch kann völlig darauf verzichtet werden, der Trägerflüssigkeit, wie im Stand der Technik unumgänglich, Harze oder Polymere hinzuzufügen, welche nach dem Druckvorgang vernetzen und dadurch für die Fixierung der Pigmentpartikel auf der Oberfläche sorgen sollen. Wie in der Beschreibung des Stands der Technik ausführlich erläutert worden ist, bringt die Verwendung dieser wasserunlöslichen Harze oder Polymere diverse Probleme mit sich, da zwar einerseits zur sicheren Fixierung der Pigmentpartikel auf der Oberfläche eine hohe Konzentration und eine schnelle Vernetzung gewünscht ist, andererseits derartige Effekte innerhalb des Drucksystems ausgeschlossen werden müssen, um Betriebsstörungen, beispielsweise durch zugesetzte Zuleitungen oder Tintendüsen zu vermeiden. Diese Probleme können bei der erfindungsgemäßen Tintenzusammensetzung von vornherein ausgeschlossen werden, da die thermoplastischen Pigmentpartikel nach dem Aufbringen auf die Oberfläche allein durch Wärmeeinwirkung fixiert werden können und der Zusatz von reaktiven Harzen oder Polymeren zur Trägerflüssigkeit nicht erforderlich ist. Somit kann die Tintenzusammensetzung hinsichtlich ihrer Wärme- und Langzeitstabilität optimiert werden. Die Bildung von Ablagerungen bzw. Rückständen aufgrund von Tintenausfällungen in den Düsen und Zuleitungen eines Tintenstrahldrucksystems kann auf diese Weise ebenfalls verhindert werden.

Das Farbmittel, welches vorzugsweise in der Polymermatrix des thermoplastischen Kunststoffs physikalisch bzw. mechanisch gebunden ist, kann sowohl ein in dem Kunststoff unlösliches, darin mechanisch eingeschlossenes Pigment sein, als auch ein in dem Kunststoff löslicher Farbstoff. Es können im Prinzip beliebige organische oder anorganische Pigmente dem Kunststoff zugesetzt werden, beispielsweise Ruß als Schwarzpigment. Dieses Pigment wird dem Kunststoff fein verteilt mit einer Partikelgröße zugefügt, welche deutlich geringer ist (Größenordnung?) als die Größe der Kunststoffpartikel selbst, so dass diese vollständig durchgefärbt werden. Alternativ kann der Kunststoff mit darin löslichen Farbstoffen durchgefärbt sein.

Der wässrigen Trägerflüssigkeit der erfindungsgemäßen Tintenzusammensetzung können weiterhin Dispersionshilfsmittel zugesetzt sein. Dabei handelt es sich im Prinzip bekannte, die Langzeit- Lagerstabilität und Temperaturstabilität der Dispersion verbessernde Additive. Im wesentlichen sind dies oberflächenaktive Substanzen mit einer hydrophilen und einer hydrophoben funktionalen Gruppe, wie beispielsweise Tenside oder dergleichen.

Das erfindungsgemäße Tintendruckverfahren unter Verwendung der vorgenannten, erfindungsgemäßen Tintenzusammensetzung geht davon aus, dass dauerhafte, wasserfeste Aufzeichnungen (Ausdrucke) auf einer Oberfläche dadurch hergestellt werden, dass Tinte, welche in wässriger Trägerflüssigkeit dispergierte Pigmentpartikel umfasst, auf diese Oberfläche aufgebracht und fixiert wird, beispielsweise im Tintenstrahldruckverfahren. Im Unterschied zum Stand der Technik wird dabei die vorangehend erläuterte erfindungsgemäße Tintenzusammensetzung verwendet, welche als Pigmentpartikel eingefärbte Kunststoffpartikel aus thermoplastischem Kunststoff umfasst, wobei diese Kunststoffpartikel nach dem Aufbringen der Tinte auf die Oberfläche durch Erwärmung aufgeschmolzen und dadurch dauerhaft auf der Oberfläche fixiert werden.

Wie bei bekannten Tintendruckverfahren wird beim erfindungsgemäßen Verfahren die Tinte auf die zu bedruckende Oberfläche aufgetragen, so dass die wässrige Trägerflüssigkeit verdampfen kann und die Pigmentpartikel in den bedruckten Bereichen auf der Oberfläche zurückbleiben. Während jedoch in den bekannten Druckverfahren die Tintenpartikel fixiert werden durch in der Trägerflüssigkeit enthaltene, beim Antrocknen vernetzende Harze oder Polymere, was zu den eingangs geschilderten Problemen führt, erfolgt beim erfindungsgemäßen Druckverfahren die Fixierung der Pigmentpartikel durch einen separaten, dem Tintenauftrag nachgeschalteten Schritt. In diesem Schritt werden die Kunststoffpartikel durch gezielte Wärmeeinwirkung an- bzw. aufgeschmolzen, wodurch sie mechanisch fest mit der Oberfläche verbunden werden. Dieses Aufschmelzen kann durch Strahlungswärme oder durch Kontaktwärme-Übertragung erfolgen, beispielsweise mittels eines dem Druckkopf nachgeschalteten Wärmestrahler oder einer beheizten Andruckwalze oder dergleichen.

Ein Kerngedanke des erfindungsgemäßen Tintendruckverfahrens besteht darin, dass die wässrige Trägerflüssigkeit lediglich das Transportmedium für die Pigmentpartikel bildet, welches es ermöglicht, die Pigmentpartikel gezielt auf die Oberfläche aufzubringen, beispielsweise mittels Tintenstrahldruckern oder -plottern. Der besondere Vorteil der Fixierung durch einen nachgeschalteten Verfahrensschritt, nämlich durch Wärmeeinwirkung, ermöglicht eine eindeutige Funktionstrennung, so dass die durch den eingangs geschilderten, im Stand der Technik unvermeidlichen Zielkonflikt entstehenden Probleme bei der Fixierung der Pigmentpartikel auf der Oberfläche grundsätzlich vermieden werden.

Eine Tintendruckeinrichtung zur Herstellung von Tintendrucken nach dem vorangehend erläuternden erfindungsgemäßen Tintendruckverfahren weist zumindest einen Druckkopf auf, der an einen Tintenvorratsbehälter anschließbar ist und von dem Tinte zur Herstellung von Aufzeichnungen (Ausdrucken) auf eine Oberfläche abgebbar ist. Um die erfindungsgemäße thermische Fixierung der Pigmentpartikel zu erreichen, wird erfindungsgemäß eine Heizeinrichtung vorgesehen, zur Erwärmung von dem Druckkopf auf die Oberfläche abgegebenen Tinte.

Die Heizeinrichtung kann einen Heizstrahler umfassen, beispielsweise einen in Druckrichtung hinter dem Druckkopf angebrachte, leistungsstarke Halogenlampe oder dergleichen. Alternativ kann als Heizeinrichtung ein Kontaktheizelement vorgesehen sein, beispielsweise in Form einer beheizten Rolle, Walze oder Kufe, welche entweder von der Druckseite aus gegen die dort abgeschiedenen Pigmentpartikel gepresst wird oder die Oberfläche des zu bedruckenden Materials, beispielsweise Papier oder Folie, von der Rückseite her erwärmt.

Eine vorteilhafte Weiterbildung einer derartigen Tintendruckeinrichtung sieht vor, dass das Heizelement lösbar angebracht ist. Dadurch kann beispielsweise ein vorhandener Tintenstrahldrucker durch wahlweise Anbringung eines Heizstrahlers zur Durchführung des erfindungsgemäßen Tintendruckverfahrens umgerüstet werden.

Die erfindungsgemässen Pigmentpartikel können ähnlich aufgebaut sein wie die sogenannten "Microtoner" für Fotocopierer oder Laserdrucker. Die Kunststoff-Pigmentpartikel sind zumeist kleiner als 10 µm (0,010 mm), typisch 3 - 5 µm. Die Farbstoffe sind in der Harzmatrix der Pigmentpartikel extrudiert oder in-situ polymerisiert.

Die Erfindung ermöglicht erstmals, derartige Kunststoff-Pigmentpartikel durch ein Tintenstrahldruckverfahren auf eine zu bedruckende Oberfläche aufzubringen. Die Ausdrucke haben nach der Fixierung der Pigmentpartikel auf der Oberfläche, wie dies weiter oben ausführlich erläutert worden ist, eine besonders hohe Lichtechtheit (UV- und Sauerstoff-Schutz) und Wasserfestigkeit. Damit sind mit der erfindungsgemässen Tintenzusammensetzung hergestellte Ausdrucke so haltbar wie Laserdrucke oder Fotocopien.

## Patentansprüche

1. Tintenzusammensetzung insbesondere für Tintenstrahl-Druckeinrichtungen, welche eine wässrige Trägerflüssigkeit umfasst, in der feste Pigmentpartikel dispergiert sind, **gekennzeichnet dadurch, dass** die Pigmentpartikel als durchgehend gefärbte Kunststoffpartikel aus thermoplastischem Kunststoff ausgebildet sind.

2. Tintenzusammensetzung nach Anspruch 1, **dadurch gekennzeichnet, dass** der thermoplastische Kunststoff in einer Polymermatrix physikalisch gebundenes Farbmittel umfasst.

3. Tintenzusammensetzung nach Anspruch 1 oder 2, **dadurch gekennzeichnet, dass** das Farbmittel ein in dem Kunststoff unlösliches, mechanisch gebundenes Pigment ist.

4. Tintenzusammensetzung nach Anspruch 1 oder 2, **dadurch gekennzeichnet, dass** das Farbmittel ein in dem Kunststoff löslicher Farbstoff ist.

5. Tintenzusammensetzung nach einem der Ansprüche 1 bis 4, **dadurch gekennzeichnet, dass** die Kunststoffpartikel eine mittlere Partikelgröße von bis zu 1 µm haben.

6. Tintenzusammensetzung nach einem der Ansprüche 1 bis 5, **dadurch gekennzeichnet, dass** der wässrigen Trägerflüssigkeit Dispersionshilfsmittel zugesetzt sind.

7. Tintenzusammensetzung nach einem der Ansprüche 1 bis 6, **dadurch gekennzeichnet, dass** die Kunststoffpartikel in-situ-polymerisiert sind.

8. Tintendruckverfahren zur Herstellung dauerhafter, wasserfester Aufzeichnungen auf einer Oberfläche, insbesondere Tintenstrahldruckverfahren, bei dem Tinte, welche in wässriger Trägerflüssigkeit dispergierte Pigmentpartikel umfasst, auf die Oberfläche aufgebracht und dort fixiert wird, **dadurch gekennzeichnet, dass** als Pigmentpartikel eingefärbte Künststoffpartikel aus thermoplastischem Kunststoff verwendet werden, die nach dem Aufbringen der Tinte auf die Oberfläche durch Erwärmung aufgeschmolzen und dadurch dauerhaft auf der Oberfläche fixiert werden.

9. Tintendruckverfahren nach Anspruch 8, **dadurch gekennzeichnet, dass** die Erwärmung durch Strahlungswärme erfolgt.

10. Tintendruckverfahren nach Anspruch 8, **dadurch gekennzeichnet, dass** die Erwärmung durch Kontaktwärme erfolgt.

11. Tintendruckeinrichtung, welche zumindest einen Druckkopf aufweist, der an einen Tintenvorratsbehälter anschließbar ist und von dem Tinte zur Herstellung von Aufzeichnungen auf eine Oberfläche abgebbar ist, **gekennzeichnet durch** eine Heizeinrichtung zur Erwärmung der von dem Druckkopf auf die Oberfläche abgegebenen Tinte.

12. Tintendruckeinrichtung nach Anspruch 11, **dadurch gekennzeichnet, dass** die Heizeinrichtung einen Heizstrahler umfasst.

13. Tintendruckeinrichtung nach Anspruch 11, **dadurch gekennzeichnet, dass** die Heizeinrichtung ein Kontaktheizelement umfasst.

14. Tintendruckeinrichtung nach einem der Ansprüche 11 bis 13, **dadurch gekennzeichnet, dass** das Heizelement lösbar angebracht ist.
